# EUROPEAN PATENT APPLICATION

(11) **EP 4 814 074 A1**
(43) Date of publication of application: **30.09.2026**
(21) Application number: 26160975.4
(22) Date of filing: 26.02.2026
(51) Int. Cl.: C09J 7/38, C08F 2/26, C08F 6/00, C08F 6/14, C08F 220/18, C09J 133/08

(54) **WATER-DISPERSED PRESSURE-SENSITIVE ADHESIVE COMPOSITION AND PRESSURE-SENSITIVE ADHESIVE SHEET**

(30) Priority: 17.03.2025 JP 2025042881
(71) Applicant: Nitto Denko Corporation, Ibaraki-shi, Osaka 567-8680 (JP)
(72) Inventor: TAKAHASHI, Akiko, Osaka, 567-8680 (JP); YAMAMOTO, Shuhei, Osaka, 567-8680 (JP)
(74) Representative: Müller-Boré & Partner Patentanwälte PartG mbB

(57) **Abstract**

[Problem]

A water-dispersed PSA composition that has a significantly reduced amount of residual monomer and exhibits good decay resistance is provided.

[Solution]

Provided is water-dispersed PSA composition comprising an emulsion polymerization product of starting monomers. The water-dispersed PSA composition has a residual monomer amount of 500 µg/g or less and an oxygen concentration of 4 mg/L or higher.

## Description

### [Technical Field]

The present invention relates to a water-dispersed pressure-sensitive adhesive (PSA) composition and a PSA sheet.

### [Background Art]

In general, pressure-sensitive adhesive (PSA) exists as a soft solid (a viscoelastic material) in a room temperature range and has a property to adhere easily to an adherend with some pressure applied. With such properties, PSAs are widely used, for instance, in the form of PSA sheets with PSA layers formed from the PSAs, as a workable and highly reliable joining means in various industrial fields such as home appliances, automobiles and office equipment.

Recently, much attention has been placed on environmental problems such as global warming with expectations for reducing the usage of fossil resource materials such as petroleum. Under such circumstances, it is also desired in the PSA field to reduce the usage of fossil resource materials. Thus, for forming PSAs, water-dispersed PSA compositions (with adhesive components dispersed in water) tend to be preferred over solvent-based PSA compositions (with adhesive components dissolved in an organic solvent). Other ongoing studies include further improvements in the hygienic quality of PSA sheets with PSAs formed from water-dispersed PSA compositions. For instance, Patent Document 1 describes how PSA sheets with less unpleasant odors can be efficiently produced by reducing the amount of residual monomer in acrylic polymer emulsions obtained by emulsion polymerization of starting monomers (Paragraph 0011, etc.).

### [Citation List]

### [Patent Literature]

[Patent Document 1] Japanese Patent Application Publication No. 2009-249497

### [Summary of Invention]

### [Technical Problem]

Due to using water as the dispersion medium, water-dispersed PSA compositions are rather more susceptible to bacterial growth than solvent-based PSA compositions. For instance, when stored at room temperature or above, the bacteria can produce an unpleasant odor. In particular, significant reduction of residual monomers in a water-dispersed PSA composition leads to a new problem whereby growth of the bacteria (decay of the composition) becomes more likely to progress.

The present invention has been made in view of such circumstances with an objective to provide a water-dispersed PSA composition with greatly reduced residual monomers and good decay resistance (anti-rotting properties). Another related objective is to provide a PSA sheet having a PSA formed from the water-dispersed PSA composition. Yet another related object is to provide a method for storing a water-dispersed PSA composition with greatly reduced residual monomers while preventing decay during storage.

### [Solution to Problem]

The present description provides a water-dispersed PSA composition comprising an emulsion polymerization product (or emulsion polymer) of a starting monomer mixture (starting monomers). The water-dispersed PSA composition (or sometimes simply "PSA composition" hereinafter) has a residual monomer amount of 500 µg/g or less and an oxygen concentration of 4 mg/L or higher. A water-dispersed PSA composition having such an oxygen concentration can show good decay resistance, although the composition has a limited amount of residual monomer of 500 µg/g or less.

In some embodiments, the starting monomer mixture includes an acrylic monomer. The art disclosed herein can be preferably implemented as a water-dispersed PSA composition comprising an emulsion polymer of the starting monomer mixture including an acrylic monomer. For instance, the starting monomer mixture preferably includes 50 % or more of acrylic monomer by weight (the acrylic monomer content of the starting monomer mixture is preferably 50 wt% or higher).

The water-dispersed PSA composition can include a crosslinking agent. In some embodiments, the crosslinking agent preferably includes at least one species selected from the group consisting of a silane monomer, an oxazoline-based crosslinking agent, and a carbodiimide-based crosslinking agent. The water-dispersible PSA composition in such an embodiment can be advantageous in view of its storage stability, etc. Used as a component of the starting monomer mixture, the silane monomer can be copolymerized in the emulsion polymer of the starting monomer mixture, and included in this form in the PSA composition.

This description also provides a PSA sheet having a PSA layer formed from a water-dispersed PSA composition disclosed herein. As described above, the water-dispersed PSA composition has a limited amount of residual monomer. When such a PSA composition is used to form a PSA layer, it is easy to reduce the total amount of volatile organic compounds (or "total volatile organic compounds amount" or simply "TVOC amount" hereinafter) emitted from a PSA sheet having the PSA layer under prescribed conditions. This is advantageous in view of environmental hygiene. In some preferable embodiments, when the PSA sheet is stored at 80 °C for 30 minutes, the total amount of volatile organic compounds (TVOC amount) emitted from the PSA sheet can be, for instance, 200 µg/g or less.

This description also provides a method for storing a water-dispersed PSA composition comprising an emulsion polymer of a starting monomer mixture. The storage method includes maintaining the oxygen concentration of the water-dispersed PSA composition at 4 mg/L or higher. By employing the method, the water-dispersed PSA composition can be favorably inhibited from decaying. The storage method can be preferably applied to storing, for instance, a water-dispersed PSA composition in which the residual monomer amount is limited to 500 µg/g or less, thereby effectively inhibiting decay of the composition.

In some embodiments, maintaining the oxygen concentration at 4 mg/L or higher includes stirring the water-dispersed PSA composition in contact with an oxygen-containing gas (e.g., air). The method disclosed herein can be preferably practiced in such an embodiment.

### [Brief Description of Drawings]

Fig. 1 shows a diagram schematically illustrating an example of a method for producing a water-dispersed PSA composition.
Fig. 2 shows a cross-sectional diagram schematically illustrating a structural example of the PSA sheet.
Fig. 3 shows a cross-sectional diagram schematically illustrating another structural example of the PSA sheet.
Fig. 4 shows a cross-sectional diagram schematically illustrating another structural example of the PSA sheet.
Fig. 5 shows a cross-sectional diagram schematically illustrating another structural example of the PSA sheet.

### [Description of Embodiments]

Preferred embodiments of the present invention are described below. Matters necessary to practice this invention other than those specifically referred to in this description can be understood by a person skilled in the art based on the disclosure about implementing the invention in this description and common general knowledge at the time of application. The present invention can be practiced based on the contents disclosed in this description and common technical knowledge in the subject field. In the drawings referenced below, a common reference numeral may be assigned to members or sites producing the same effects, and duplicated descriptions are sometimes omitted or simplified. The embodiments described in the drawings are schematized for clear illustration of the present invention, and do not necessarily represent the accurate size or reduction scale of a PSA sheet of this invention that is actually provided as a product.

As described above, the term "PSA" in this description refers to a material present in a soft solid (viscoelastic) state in a room temperature range and has a property to easily adhere to adherends with some pressure applied. As defined in "Adhesion: Fundamental and Practice" by C. A. Dahlquist (McLaren & Sons (1966), P. 143), the PSA referred to herein can be a material having a property that satisfies complex tensile modulus E* (1Hz) < 10⁷ dyne/cm² (typically, a material exhibiting the described characteristics at 25 °C).

The term "water-dispersed PSA composition" in this description refers to a composition in which the PSA components are at least partially dispersed in water. The water-dispersed state also includes a suspended state and an emulsified state. The concept of the water-dispersed PSA composition includes so-called emulsion-based PSA compositions. In this description, a PSA (layer) formed from a water-dispersed PSA composition may be referred to as a water-dispersed PSA (layer).

The term "acrylic polymer" in this description refers to a polymer comprising, as a monomeric unit constituting the polymer, more than 50 wt% monomeric unit derived from an acrylic monomer. The acrylic monomer refers to a monomer having at least one (meth)acryloyl group per molecule.

As used herein, the term "(meth)acryloyl" comprehensively refers to acryloyl and methacryloyl. Similarly, the term "(meth)acrylate" comprehensively refers to acrylate and methacrylate, and the term "(meth)acryl" comprehensively refers to acryl and methacryl.

### <Water-Dispersed PSA Composition>

The water-dispersed PSA composition disclosed herein comprises an emulsion polymer of a starting monomer mixture. The PSA composition has a residual monomer amount of 500 µg or less per gram of the PSA composition (i.e., 500 µg/g or less). The residual monomer typically refers to the residual portion of the monomers in the starting monomer mixture, whose polymerizable functional group remains unreacted in the PSA composition. A PSA composition with a limited amount of residual monomer as described above has the advantage of readily reducing TVOC amount of PSA sheets having PSA layers formed from the PSA composition. A low amount of residual monomer in a water-dispersed PSA composition is also preferable in view of reducing the monomer odor of the PSA composition. In some embodiments, the residual monomer amount of the PSA composition is preferably 400 µg/g or less, more preferably 300 µg/g or less, possibly 270 µg/g or less, 250 µg/g or less, 220 µg/g or less, or 200 µg/g or less. The minimum residual monomer amount of the PSA composition is not particularly limited and can be 0 µg/g or below the detection limit. On the other hand, in practical aspects such as productivity and cost, in some embodiments, the PSA composition can have a residual monomer amount of, for instance, 20 µg/g or greater, 50 µg/g or greater, or 100 µg/g or greater.

As for the residual monomer amount in a water-dispersed PSA composition, a sample can be collected from the subject (here, the water-dispersed PSA composition), dissolved in an appropriate amount of an organic solvent (e.g., tetrahydrofuran), and analyzed by gas chromatography (GC) to determine the residual monomer amount per unit weight of the PSA composition (µg/g). GC analysis can be carried out, using a commercially available system. For instance, model 6890N available from Agilent Technologies or an equivalent system can be used. More specifically, the residual monomer amount can be measured, for instance, by the method described later in Examples.

The water-dispersed PSA composition disclosed herein has an oxygen concentration (dissolved oxygen concentration) of 4 mg/L or higher. As a result, even though the water-dispersed PSA composition has a limited amount of residual monomer as described above, it can still exhibit good decay resistance. This effect can be attributed to that increasing the oxygen concentration in the water-dispersed PSA composition to a certain level or higher inhibits the growth of anaerobic bacteria in the PSA composition. However, the art disclosed herein should not be interpreted as being limited to this reason alone. In view of helping to obtain superior inhibition of decay and/or bacterial growth, in some embodiments, the oxygen concentration of the PSA composition can be, for instance, 4.5 mg/L or higher, preferably 5 mg/L or higher, more preferably 5.5 mg/L or higher, also possibly 5.7 mg/L or higher, or 6 mg/L or higher. The maximum oxygen concentration is not particularly limited. In some embodiments, in view of ease of maintenance, etc., the oxygen concentration of the PSA composition can be, for instance, 10 mg/L or lower, 9 mg/L or lower, 8 mg/L or lower, 7 mg/L or lower, 6.5 mg/L or lower, 6 mg/L or lower, 5.5 mg/L or lower, or 5 mg/L or lower.

The oxygen concentration of a water-dispersed PSA composition (i.e., the weight (mg) of dissolved oxygen in 1 L of water-dispersed PSA composition) can be measured by conventional methods using a commercially available dissolved oxygen (DO) meter. As the commercially available DO meter, model 810Aplus available from THERMO ELECTRON Co., Ltd. or an equivalent product can be used.

The water-dispersed PSA composition according to some preferable embodiments has a residual monomer amount of 500 µg/g or less (more preferably 300 µg/g or less) and an oxygen concentration of 4 mg/L or higher. When the water-dispersed PSA composition is stored at 30 °C for 7 days, the number of bacteria after storage is less than 1·10⁶ per mL thereof. Such a water-dispersed PSA composition can effectively prevent the generation of a putrid odor. In view of readily obtaining superior effects, the number of bacteria after storage is preferably less than 1 × 10⁵ per mL, more preferably less than 1 × 10⁴ per mL, yet more preferably less than 1 × 10³ per mL, or particularly preferably less than 1 × 10² per mL. The number of bacteria per mL of stored PSA composition can be obtained by a conventional method using a commercially available microbial culture kit (e.g., microbial detection sheet MC-MEDIA PAD (trademark) Ac plus for general viable bacteria available from JNC Corporation, or an equivalent product). For instance, the number of bacteria after storage can be determined in the same manner as the bacteria enumeration described later in Examples.

Given that the water-dispersed PSA composition according to some preferable embodiments is applied to a release liner and dried at 100 °C for 2 minutes to obtain an approximately 60 µm thick PSA layer, when an approximately 1 g of the PSA (sample) collected from the PSA layer is heated at 80 °C for 30 minutes, the TVOC amount (total amount of volatile organic compounds emitted from the PSA) is 300 µg or less per 1 g of the PSA (i.e., 300 µg/g or less). The art disclosed herein can be preferably implemented as a water-dispersed PSA composition capable of forming a PSA with such a low TVOC amount. In some embodiments, the TVOC amount is preferably less than 250 µg/g, more preferably 200 µg/g or less (or less than 200 µg/g), yet more preferably less than 150 µg/g, or particularly preferably less than 100 µg/g. The minimum TVOC amount is not particularly limited. In some embodiments, in practical aspects such as production management and productivity, the TVOC amount can be, for instance, 10 µg/g or greater, 30 µg/g or greater, or 50 µg/g or greater. The TVOC amount can be measured in the same manner as the TVOC amount of a PSA sheet described later, but using approximately 1 g of PSA as a sample.

### (Emulsion Polymer of Starting Monomer Mixture)

In the water-dispersed PSA composition disclosed herein, as the emulsion polymer of the starting monomer mixture, one, two or more species can be suitably selected and used among various water-dispersed polymers. As used herein, "water-dispersed polymer" refers to a polymer dispersed in water. A water-dispersed PSA composition comprising a water-dispersed polymer can be prepared using, for instance, a polymer emulsion in which the water-dispersed polymer is dispersed in water. The type of water-dispersed polymer is not particularly limited. Examples include a water-dispersed acrylic polymer and a water-dispersed rubber polymer (e.g., water-dispersed styrene-butadiene rubber). In particular, a water-dispersed acrylic polymer is preferable. In the following, water-dispersed PSA compositions comprising water-dispersed acrylic polymers are mainly discussed, but the water-dispersed polymer disclosed herein is not to be limited to a water-dispersed acrylic polymer.

The water-dispersed PSA composition according to some preferable embodiments comprises a water-dispersed acrylic polymer as the emulsion polymer of the starting monomer mixture. As used herein, "water-dispersed acrylic polymer" refers to an acrylic polymer synthesized as dispersed in water, in particular, an acrylic polymer synthesized by emulsion polymerization. Water-dispersed acrylic polymers can be obtained by polymerizing acrylic monomers under highly controlled reaction conditions, advantageously allowing easy control of the residual monomer amount in the PSA composition. Water-dispersed acrylic polymers allow for highly flexible molecular design, having the advantage of readily bringing about desirable properties.

The water-dispersed PSA composition disclosed herein is preferably a water-dispersed acrylic PSA composition comprising a water-dispersed acrylic polymer as base polymer. Here, the term "base polymer" refers to the primary component among the rubber-like polymers in the PSA composition, and is not to be construed in any other limiting sense. The rubber-like polymers refer to polymers that exhibit rubber elasticity in a temperature range near room temperature. In this description, the term "primary component" refers to a component that accounts for more than 50 wt% unless otherwise specified. Hereinafter, water-dispersed acrylic polymers may be simply referred to as acrylic polymers.

As the acrylic polymer, for example, an emulsion polymer of a monomeric starting material (monomers) comprising an alkyl (meth)acrylate as the primary monomer and possibly comprising a secondary monomer copolymerizable with the primary monomer is preferable. The primary monomer herein refers to a component that accounts for higher than 50 wt% of the monomer composition in the monomeric starting material.

As the alkyl (meth)acrylate, for instance, a compound represented by the following formula (1) can be preferably used:

CH₂=C(R¹)COOR² (1)

Herein, R¹ in the formula (1) is a hydrogen atom or a methyl group. R² is a linear alkyl group having 1 to 20 carbon atoms (hereinafter, such a range of the number of carbon atoms may be indicated as "C₁₋₂₀"). From the standpoint of the storage elastic modulus of PSA, an alkyl (meth)acrylate with R² being a C₁₋₁₄ linear alkyl group is preferable, an alkyl (meth)acrylate with R² being a C₁₋₁₀ linear alkyl group is more preferable.

Examples of an alkyl (meth)acrylate with R² being a C₁₋₂₀ linear alkyl group include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, pentyl (meth)acrylate, isopentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, etc. Among these alkyl (meth)acrylates, can be used one species solely or a combination of two or more species. Favorable examples of alkyl (meth)acrylates include n-butyl acrylate (BA) and 2-ethylhexyl acrylate (2EHA).

The art disclosed herein can be preferably implemented, using an acrylic polymer in which an acyclic C₁₋₂₀ alkyl (meth)acrylate (an alkyl (meth)acrylate with R² being an acyclic C₁₋₂₀ alkyl (meth)acrylate) accounts for about 50 wt% or more of the monomers. In some preferable embodiments, the acyclic C₁₋₂₀ alkyl (meth)acrylate content of the monomers can be about 75 wt% or greater, about 90 wt% or greater, or about 95 wt% or greater. In an embodiment using the secondary monomer, the maximum acyclic C₁₋₂₀ alkyl (meth)acrylate content of the monomers can be, for instance, 99.9 wt% or less, 99.5 wt% or less, or 99 wt% or less (e.g., 98.5 wt% or less).

In some embodiments, the monomers preferably include an acyclic C₄₋₁₀ alkyl (meth)acrylate (an alkyl (meth)acrylate having an acyclic C₄₋₁₀ alkyl group as R² in the formula (1)). The acyclic C₄₋₁₀ alkyl (meth)acrylate is more preferably an acyclic C₄₋₈ alkyl (meth)acrylate. In view of adhesive properties, an acyclic C₄₋₁₀ alkyl acrylate (an alkyl acrylate with R¹ being a hydrogen atom and R² being an acyclic C₄₋₁₀ alkyl group) is yet more preferable, and an acyclic C₄₋₈ alkyl acrylate (an alkyl acrylate with R¹ being a hydrogen atom and R² being an acyclic C₄₋₈ alkyl group) is particularly preferable. For the acyclic C₄₋₁₀ alkyl (meth)acrylate, solely one species or a combination of two or more species can be used. The acyclic C₄₋₁₀ alkyl (meth)acrylate content of the alkyl (meth)acrylates in the monomers is preferably about 50 wt% or greater, more preferably 70 wt% or greater, or yet more preferably 80 wt% or greater. The maximum acyclic C₄₋₁₀ alkyl (meth)acrylate content of the alkyl (meth)acrylates is 100 wt%. In view of obtaining good cohesive strength, in some embodiments, it is suitably about 95 wt% or less, or possibly about 90 wt% or less.

In some embodiments, the monomers preferably include an acyclic C₆₋₁₀ alkyl (meth)acrylate. The acyclic C₆₋₁₀ alkyl (meth)acrylate is more preferably an acyclic C₇₋₉ alkyl (meth)acrylate, or yet more preferably an acyclic C₈ alkyl acrylate. As the acyclic C₆₋₁₀ alkyl (meth)acrylate, an acyclic alkyl acrylate is preferably used. For the acyclic C₆₋₁₀ alkyl (meth)acrylate, solely one species or a combination of two or more species can be used. In some preferable embodiments, the acyclic C₆₋₁₀ alkyl (meth)acrylate content of the alkyl (meth)acrylates in the monomers is preferably about 50 wt% or greater (e.g., above 50 wt%), possibly 60 wt% or greater, 70 wt% or greater, or 80 wt% or greater. The maximum acyclic C₆₋₁₀ alkyl (meth)acrylate content of the alkyl (meth)acrylates is 100 wt%. In view of obtaining good cohesive strength, in some embodiments, it is suitably about 95 wt% or less, or possibly about 90 wt% or less.

As the acyclic C₆₋₁₀ alkyl (meth)acrylate, 2EHA is preferably used. In an embodiment using 2EHA, the amount of 2EHA is not particularly limited. Of the acyclic C₄₋₁₀ alkyl (meth)acrylates, it is suitably greater than 50 wt%, preferably 70 wt% or greater, more preferably 90 wt% or greater, or yet more preferably 95 wt% or greater (e.g., 95 wt% to 100 wt%).

When the alkyl (meth)acrylate includes an aforementioned acyclic C₄₋₁₀ alkyl (meth)acrylate, it may also include other alkyl (meth)acrylates (alkyl (meth)acrylate(s) having an acyclic C_{<4} or C_{>10} alkyl group (alkyl group with fewer than four carbon atoms or more than ten carbon atoms) as R² in the formula (1)). This can bring about both adhesiveness and cohesiveness in a well-balanced manner. As the other alkyl (meth)acrylates, an alkyl (meth)acrylate having an acyclic C₁₋₃ alkyl group as R² in the formula (1) can be preferably used. Specific examples thereof include methyl acrylate (MA), methyl methacrylate (MMA) and ethyl acrylate (EA). Among them, MA is more preferable. Among the other alkyl (meth)acrylates, solely one species or a combination of two or more species can be used. The other alkyl (meth)acrylate content of the alkyl (meth)acrylates in the monomers is preferably about 30 wt% or less, for instance, possibly about 20 wt% or less, or about 15 wt% or less. In view of obtaining the effect of the other alkyl (meth)acrylates, of the entire alkyl (meth)acrylates, the other alkyl (meth)acrylate content is preferably about 1 wt% or greater, for instance, possibly about 5 wt% or greater, or about 10 wt% or greater.

The secondary monomer copolymerizable with the alkyl (meth)acrylate being the primary monomer may be useful for introducing crosslinking points in the acrylic polymer or increasing the cohesive strength of the acrylic polymer. As the secondary monomer, for instance, the following functional group-containing monomers can be used, one species solely or a combination of two or more species:
Carboxy group-containing monomers: for example, ethylenic unsaturated mono-carboxylic acids such as acrylic acid, methacrylic acid, carboxyethyl (meth)acrylate, carboxypentyl (meth)acrylate, crotonic acid, etc.; ethylenic unsaturated dicarboxylic acids such as maleic acid, itaconic acid, citraconic acid, etc., as well as anhydrides thereof (maleic acid anhydride, itaconic acid anhydride, etc.).

Hydroxy group-containing monomers: for example, hydroxyalkyl (meth)acrylates such as 2-hydroxyethyl (meth)acrylate, 2-hydroxypropyl (meth)acrylate, 3-hydroxypropyl (meth)acrylate, 4-hydroxybutyl (meth)acrylate, etc.; unsaturated alcohols such as vinyl alcohol, allyl alcohol, etc.

Amide group-containing monomers: for example, (meth)acrylamide, N,N-dimethyl(meth)acrylamide, N-butyl(meth)acrylamide, N-methylol(meth)acrylamide, N-methylolpropane(meth)acrylamide, N-methoxymethyl(meth)acrylamide, N-butoxymethyl(meth)acrylamide.

Amino group-containing monomers: for example, aminoethyl (meth)acrylate, N,N-dimethylaminoethyl (meth)acrylate, t-butylaminoethyl (meth)acrylate.

Epoxy group-containing monomers: for example, glycidyl (meth)acrylate, methylglycidyl (meth)acrylate, allyl glycidyl ether.

Cyano group-containing monomers: for example, acrylonitrile, methacrylonitrile.

Keto group-containing monomers: for example, diacetone (meth)acrylamide, acetoacetoxyethyl (meth)acrylate, acetoacetoxybutyl (meth)acrylate, diacetone (meth)acrylate, vinyl methyl ketone, vinyl ethyl ketone, allyl acetoacetate, vinyl acetoacetate.

Monomers having nitrogen atom-containing rings: for example, N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam, N-(meth)acryloyl morpholine.

Silane monomers: for example, alkoxysilyl group-containing monomers such as 3-(meth)acryloxypropyltrimethoxysilane, 3-(meth)acryloxypropyltriethoxysilane, 3-(meth)acryloxypropylmethyldimethoxysilane, and 3-(meth)acryloxypropylmethyldiethoxysilane.

The functional group-containing monomers can be used singly as one species or in a combination of two or more species. Among the functional group-containing monomers, for the abilities to preferably bring about introduction of crosslinking points as described above and an increase in cohesive strength, carboxy group-containing monomers, carbonyl group-containing monomers (typically, keto group-containing monomers), hydroxy group-containing monomers, cyano group-containing monomers and silane monomers are preferable.

When a functional group-containing monomer is copolymerized in the acrylic polymer, the ratio of functional group-containing monomer to all monomers constituting the acrylic polymer is not particularly limited. Usually, from the standpoint of combining cohesive strength and adhesiveness at a good balance, the ratio of functional group-containing monomer is preferably about 0.1 wt% or higher, for example, about 0.5 wt% or higher, or possibly about 1 wt% or higher. In view of the effect of the alkyl (meth)acrylate on the adhesion, in some embodiments, the ratio of functional group-containing monomer is preferably about 40 wt% or lower, for example, 30 wt% or lower, possibly about 20 wt% or lower, 10 wt% or lower, 5 wt% or lower, or 3 wt% or lower.

In some preferable embodiments, the monomers forming the acrylic polymer comprises a carboxy group-containing monomer. The inclusion of the carboxy group-containing monomer in the monomers helps obtain a PSA sheet with good adhesive properties (cohesive strength, etc.). It may also be advantageous in enhancing adhesion between the PSA layer and the adherend. As the carboxy group-containing monomer, solely one species or a combination of two or more species can be used. As the carboxy group-containing monomer, acrylic acid and methacrylic acid are preferably used.

When a carboxy group-containing monomer is copolymerized in the acrylic polymer, the ratio of carboxy group-containing monomers to all monomers is not particularly limited. In view of cohesive strength, etc., in some embodiments, the ratio of carboxy group-containing monomers is, for instance, preferably about 0.1 wt% or higher, more preferably about 0.5 wt% or higher, yet more preferably about 1 wt% or higher, or particularly preferably about 1.5 wt% or higher. In view of adhesive properties such as adhesive strength, in some embodiments, the ratio of carboxy group-containing monomers is suitably about 15 wt% or lower, or possibly about 12 wt% or lower, for example 10 wt% or lower. In some preferable embodiments, the ratio of carboxy group-containing monomers to all monomers is preferably 6 wt% or lower (or below 6 wt%), more preferably 5 wt% or lower (or below 5 wt%), yet more preferably 4 wt% or lower (or below 4 wt%, e.g., 3.5 wt% or lower), possibly 3 wt% or lower, or 2.5 wt% or lower.

In an embodiment where the monomers include a carboxy group-containing monomer as a functional group-containing monomer, in view of effectively obtaining the effect of copolymerizing the carboxy group-containing monomer, the amount of carboxy group-containing monomer in the entire functional group-containing monomers (including the carboxy group-containing monomer) used as comonomers of the acrylic polymer is suitably 30 wt% or greater, preferably 50 wt% or greater, more preferably 70 wt% or greater, yet more preferably 80 wt% or greater, or particularly preferably 90 wt% or greater. For instance, it can be 95 wt% or greater, 97 wt% or greater, 98 wt% or greater, or 99 wt% or greater (e.g., 99.9 wt% or greater). The maximum carboxy group-containing monomer content of the entire functional group-containing monomers is 100 wt% and can be, for instance, 95 wt% or less.

In some embodiments, the carboxy group-containing monomer preferably includes acrylic acid (AA). The use of acrylic acid helps to obtain good adhesive properties (adhesive strength, cohesive strength, etc.) and excellent polymer dispersion stability. In some embodiments, the acrylic acid content of the monomers is, for instance, preferably 0.1 wt% or greater, more preferably about 0.5 wt% or greater, or yet more preferably about 1 wt% or greater. In view of adhesive properties such as adhesive strength, in some embodiments, the acrylic acid content is suitably 10 wt% or less. For instance, it can be 7 wt% or less. In some preferable embodiments, the acrylic acid content of the monomers is preferably 5 wt% or less (or below 5 wt%), more preferably 4 wt% or less (or below 4 wt%, e.g., 3.5 wt% or less), yet more preferably 3 wt% or less, possibly 2.5 wt% or less, 2 wt% or less (e.g., below 2 wt%), 1.75 wt% or less, or 1.5 wt% or less.

In an embodiment using acrylic acid as the carboxy group-containing monomer, the acrylic acid content of the entire carboxy group-containing monomers is suitably 30 wt% or greater, preferably 50 wt% or greater (e.g., above 50 wt%), or possibly 60 wt% or greater. The maximum acrylic acid content of the entire carboxy group-containing monomers is not particularly limited. In some embodiments, it can be 90 wt% or less, 80 wt% or less, or 70 wt% or less.

In some preferable embodiments, acrylic acid (AA) and methacrylic acid (MAA) are used together as carboxy group-containing monomers. A PSA comprising an acrylic polymer having such a monomer composition (i.e., copolymer composition) can provide a PSA sheet with higher performance (e.g., superior repulsion resistance). The AA to MAA weight ratio (AA/MAA) can be in the range of, for instance, possibly about 0.1 to 10, more preferably about 0.3 or higher, yet more preferably 0.5 or higher, or particularly preferably 1.0 or higher (e.g., above 1.0, or 1.2 or higher). The weight ratio (AA/MAA) is more preferably about 5 or lower, for instance, possibly 4 or lower, 3 or lower, or 2 or lower. With AA/MAA in these ranges, an increase in repulsion resistance tends to be readily obtained. In addition, after the PSA sheet is prepared, the adhesive properties tend to be highly stable over time.

In some embodiments, a silane monomer is preferably copolymerized in the acrylic polymer. As the silane monomer, an alkoxysilyl group-containing monomer is preferably used. The alkoxysilyl group-containing monomer is an ethylenic unsaturated monomer having at least one (preferably two or more, e.g. two or three) alkoxysilyl group per molecule. Specific examples thereof are as mentioned earlier. The starting monomers including a silane monomer can be subjected to emulsion polymerization to obtain a polymer emulsion comprising a water-dispersed polymer (e.g., a water-dispersed acrylic polymer) in which the silane monomer is copolymerized. The water-dispersed PSA composition comprising such a polymer emulsion can introduce a crosslinking structure by silanol condensation (condensation reaction of silanol groups) into the PSA formed from the PSA composition. Thus, the silane monomer can be thought as a crosslinking agent (typically copolymerized in a water-dispersed polymer) in the water-dispersed PSA composition. For the silane monomer, solely one species or a combination of two or more species can be used. Silane monomers are also called silane coupling agents.

When a silane monomer is copolymerized in the acrylic polymer, the ratio of silane monomer in the monomers is suitably about 0.001 wt% or higher, preferably 0.005 wt% or higher, or more preferably 0.01 wt% or higher. In some embodiments, the silane monomer content of the monomers is suitably about 0.1 wt% or lower, or preferably 0.05 wt% or lower, for example, 0.03 wt% or lower. The use of a suitable amount of silane monomer tends to help obtain a PSA that shows suitable cohesive strength.

For the purpose of increasing the cohesive strength of the acrylic polymer, etc., other comonomer(s) besides the aforementioned secondary monomers can be used. Examples of such comonomers include vinyl ester-based monomers such as vinyl acetate and vinyl propionate; aromatic vinyl compounds such as styrene, substituted styrenes (a-methylstyrene, etc.) and vinyl toluene; cycloalkyl (meth)acrylates such as cyclohexyl (meth)acrylate, cyclopentyl (meth)acrylate and isobornyl (meth)acrylate; aromatic ring-containing (meth)acrylates such as aryl (meth)acrylate (e.g. phenyl (meth)acrylate), aryloxyalkyl (meth)acrylate (e.g. phenoxyethyl (meth)acrylate) and arylalkyl (meth)acrylate (e.g. benzyl (meth)acrylate); olefinic monomers such as ethylene, propylene, isoprene, butadiene and isobutylene; chlorine-containing monomers such as vinyl chloride and vinylidene chloride; isocyanate group-containing monomers such as 2-(meth)acryloyloxyethyl isocyanate; alkoxy group-containing monomers such as methoxyethyl (meth)acrylate and ethoxyethyl (meth)acrylate; and vinyl ether-based monomers such as methyl vinyl ether and ethyl vinyl ether. Other examples of the comonomers include a polyfunctional monomer (a monomer having several functional groups in one molecule).

The amount of the other co-monomer(s) excluding the secondary monomer can be suitably selected according to the purpose and intended use, and thus is not particularly limited. For instance, of the monomer composition of the acrylic polymer, it is preferably 10 wt% or less, possibly 3 wt% or less, or less than 1 wt% (e.g., 0 wt% or more and below 1 wt%).

### (Polymerization Step)

The form of emulsion polymerization for obtaining the water-dispersed polymer (preferably acrylic polymer) is not particularly limited. Various polymerization methods known as synthetic means for acrylic polymers can be suitably employed, such as a solution polymerization method, emulsion polymerization method, bulk polymerization method, suspension polymerization method, photopolymerization method, etc. As for preferable polymerization methods, the emulsion polymerization method is cited. The embodiment of emulsion polymerization is not particularly limited. Various monomer supply methods, polymerization conditions, materials and the like similar to those for heretofore known general emulsion polymerization can be suitably used to carry out polymerization. Examples of suitable monomer supply methods include an all-at-once supply method where all starting monomers are supplied at once, continuous (dropwise) supply method, portionwise (dropwise) supply method, etc. Starting monomers can be added dropwise as an aqueous emulsion. The polymerization temperature can be about 20 °C or higher (usually 40 °C or higher) while it is suitably about 100 °C or lower (usually 80 °C or lower).

The initiator used for the polymerization can be suitably selected in accordance with the type of polymerization method among heretofore known polymerization initiators. Possible examples include azo-based initiators, persulfate salt initiators, peroxide initiators, substituted ethane initiators, carbonyl initiators, and redox initiators combining peroxides and reducing agents. These polymerization initiators can be used singly as one species or in a combination of two or more species. The polymerization initiator can be used in a usual amount and is not particularly limited. For instance, it can be selected from a range of about 0.005 by weight or above (preferably 0.01 part by weight or above) and of 1 part by weight or below (preferably 0.8 part by weight or below) relative to 100 parts by weight of the monomers.

Emulsion polymerization of the starting monomers is typically carried out in the presence of a surfactant (emulsifier). As the emulsifier, commonly known anionic surfactants, nonionic surfactants, cationic surfactants and the like can be used. Typically, an anionic or nonionic surfactant is preferable. A surfactant (emulsifier) having a reactive functional group (in typical, a radically-polymerizable functional group) can also be used. Hereinafter, a surfactant having a reactive functional group may be referred to as a reactive surfactant or reactive emulsifier. On the other hand, a general surfactant free of a reactive functional group may be referred to as a non-reactive surfactant or non-reactive emulsifier. For the surfactant, solely one species or a combination of two or more species can be used. Reactive and non-reactive emulsifiers may be used together.

The amount of surfactant (emulsifier) used in emulsion polymerization is not particularly limited. In view of the polymerization stability and dispersion stability of the polymerization reactants, in some embodiments, the amount of surfactant is typically suitably 0.1 part by weight or greater, preferably 0.5 part by weight or greater, possibly 1.0 part by weight or greater, or 1.5 parts by weight or greater per 100 parts by weight of the starting monomers. In view of adhesive properties, it is desirable to reduce the usage of surfactant. From such a standpoint, the amount of surfactant used is typically preferably 5 parts by weight or less, possibly 4 parts by weight or less, 3 parts by weight or less, or even 2.5 parts by weight or less.

In the polymerization, a chain transfer agent (which may also be thought as a molecular weight modifier or a regulator of polymerization degree) may be used as necessary. Examples of the chain transfer agent include mercaptans such as dodecyl mercaptan (dodecanethiol), lauryl mercaptan, glycidyl mercaptan, 2-mercaptoethanol, mercaptoacetic acid, 2-ethylhexyl thioglycolate and 2,3-dimethylcapto-1-propanol; and α-methyl styrene dimer. Such chain transfer agents may be used singly or as a combination of two or more species. When using a chain transfer agent, its amount used per 100 parts by weight of monomers can be about 0.001 part by weight or greater. It can be, for instance, about 0.005 part by weight or greater, or about 0.01 part by weight or greater; and for instance, about 5 parts by weight or less, for instance, about 1 part by weight or less, or about 0.1 part by weight or less. When the amount of chain transfer agent is in a suitable range, a desirable conversion to polymer can be obtained.

The emulsion polymerization allows the preparation of a polymerization reaction mixture as an emulsion in which the polymerization product (e.g., acrylic polymer) of the starting monomer mixture is dispersed in water. Typically, in view of the dispersion stability of the emulsion, a pH-adjusting agent such as ammonia water can be added to the polymerization reaction mixture to adjust the pH to a suitable range (e.g., a pH range of about 6 to 9). The emulsion polymerization is preferably carried out so that in the PSA composition prepared using the polymerization reaction mixture (polymer emulsion), the residual monomer amount is 500 µg/g or less. In view of helping to attain a low residual monomer amount in the PSA composition, in some embodiments, the polymer emulsion has a residual monomer amount of suitably 600 µg/g or less, advantageously 500 µg/g or less, preferably 400 µg/g or less, more preferably 300 µg/g or less, possibly 270 µg/g or less, 250 µg/g or less, 220 µg/g or less, or 200 µg/g or less. The minimum residual monomer amount in the polymer emulsion is not particularly limited and can be 0 µg/g or below the detection limit. On the other hand, in practical aspects such as productivity and cost, in some embodiments, the polymer emulsion can have a residual monomer amount of, for instance, 20 µg/g or greater, 50 µg/g or greater, 100 µg/g or greater, 150 µg/g or greater, 200 µg/g or greater, or 250 µg/g or greater. The residual monomer amount of a polymer emulsion can be measured in the same manner as the residual monomer amount of a water-dispersed PSA composition described earlier, but using the polymer emulsion as the subject.

In some embodiments, for instance, emulsion polymerization of the starting monomers can be carried out as follows. To a reaction vessel (polymerization tank) containing a polymerization initiator, the starting monomer mixture is supplied. The system is maintained at a polymerization temperature (preferably about 40 °C to 80 °C, e.g., about 50 °C to 70 °C) higher than room temperature to carry out the polymerization reaction of the starting monomers. Subsequently, the contents (polymerization reaction mixture) of the reaction vessel are cooled, typically to around room temperature. For instance, to a reaction vessel with the entire amount of the polymerization initiator, the entire monomer mixture can be supplied all at once, continuously over a prescribed time period (continuous supply), or portion-wise at certain regular intervals (e.g., about every 5 minutes to 60 minutes) (portion-wise supply). When continuously supplying the monomer mixture, the supply time is typically suitably about 1 hour to 8 hours, or preferably about 2 hours to 6 hours (e.g., about 3 hours to 5 hours). For the portion-wise supply of the monomer mixture, in typical, the time between when the first and last fractions of the monomer mixture are supplied is set to suitably about 1 hour to 8 hours, or preferably about 2 hours to 6 hours (e.g., about 3 hours to 5 hours). Alternatively, to a reaction vessel with a portion of the polymerization initiator, at least a portion of the starting monomer mixture can be supplied to initiate the polymerization of the starting monomers, and the remaining portion of the polymerization initiator can be supplied continuously over a prescribed time period or portion-wise at certain regular intervals. It is usually preferable to complete the supply of the polymerization initiator around the same time as or before the end of the supply of the monomer mixture.

The polymerization time (the time it takes to carry out polymerization of the starting monomers, which can be understood as the time it takes to maintain the system at the polymerization temperature after the polymerization reaction has been initiated) can be set suitably depending on the type of polymerization initiator used, the polymerization temperature, and the supply modes of polymerization initiator and starting monomers. For instance, the polymerization time can be about 2 hours to 12 hours. In view of productivity, etc., it is typically preferably about 4 hours to 8 hours. After all the starting monomers have been added to the reaction vessel, it is preferable to keep the contents (polymerization reaction mixture) of the reaction vessel at a temperature higher than room temperature for a certain period of time (to carry out so-called aging). The aging can reduce the amount of residual monomer left in the polymerization reaction mixture. This can result in a polymer emulsion capable of forming PSA layers with low TVOC amount. The aging time can be, for instance, about 30 minutes to 4 hours. In view of productivity, etc., it is typically preferably about 1 hour to 3 hours. The polymerization time here includes the aging time. Thus, for instance, if the entire starting monomer mixture is continuously supplied over 4 hours to a reaction vessel with the entire amount of polymerization initiator maintained at the polymerization temperature and the system is continuously maintained at this temperature for 2 hours after supplying the monomer mixture to allow the reaction mixture to age, the polymerization time will be 6 hours. The polymerization temperature can be constant over the entire polymerization time or may vary from one period to another. For instance, after the starting monomer mixture is supplied at a certain polymerization temperature, aging can be continued at the same polymerization temperature, at a higher temperature, or at a lower temperature (but higher than room temperature).

In some preferable embodiments, at an interval after completely supplying the starting monomer mixture to the reaction vessel, additional polymerization initiator is supplied to the contents (reaction mixture) of the reaction vessel. The supply of such additional polymerization initiator (or "additional initiator") can effectively reduce the amount of residual monomer in the polymerization reaction mixture (typically, accelerating polymerization of the residual monomer). This can result in a polymer emulsion capable of forming PSA layers with low TVOC amount. The additional initiator can be the same as or different than the polymerization initiator previously used for polymerizing the starting monomers (i.e., the polymerization initiator introduced into the reaction vessel before completing the supply of staring monomers, which is sometimes referred to as the "main initiator" hereinafter). As an additional initiator capable of efficiently reducing the amount of residual monomer, it is preferable to use a polymerization initiator that has a lower half-life temperature than the main initiator. Both can be selected among, for instance, azo-based polymerization initiators, persulfates, and peroxide-based polymerization initiators. It is also preferable to use a redox-based polymerization initiator as an additional initiator. Preferable examples include redox-based polymerization initiators such as a combination of peroxide (hydrogen peroxide, etc.) and ascorbic acid, a combination of peroxide (hydrogen peroxide, etc.) and iron(II) salts, or a combination of persulfates (ammonium persulfate, etc.) and sodium hydrogen sulfite. In particular, due to the unlikelihood of leaving excess residue after the redox reaction, the combination of hydrogen peroxide (typically used as an aqueous hydrogen peroxide at a concentration of about 1 % to 35 %) and ascorbic acid is favorable. The amount of additional initiator is not particularly limited. For instance, it can be selected from the range of about 0.005 part to 1 part by weight per 100 parts by weight of starting monomers.

The favorable timing for supplying (adding) the additional initiator to the reaction mixture varies depending on the type of additional initiator. It is preferably at some interval (typically at about 10 minutes to 4 hours, e.g., at about 1 hour to 3 hours) after completely supplying the starting monomer mixture to the reaction vessel and before completely cooling the reaction mixture. For example, in the case of additional initiators (e.g., azo-based polymerization initiators, persulfates, peroxide-based polymerization initiators) that decompose when heated to generate radicals and thereby reduce the residual monomer, it is preferable to add the additional initiator during the aging period (e.g., when about 30 % to 95 % of the aging period has elapsed). When using a redox-based additional initiator, in a preferable embodiment, the additional initiator is added either before or after the end of the aging period (e.g., by starting cooling almost simultaneously with the addition of the additional initiator) or while cooling the reaction mixture. This can effectively reduce the amount of residual monomer while minimizing the impact on productivity. The additional initiator may be added all at once, continuously, or in portions. For the simple operation, it is preferable to add all the additional initiator at once.

### (Mixing Step)

A polymerization step as described above can result in a polymerization reaction mixture (polymer emulsion) that includes an emulsion polymer (water-dispersed polymer) of the starting monomers. In some preferable embodiments, the resulting polymer emulsion is subjected to a suitable mixing step to adjust the composition, liquid properties, etc. In the mixing step, one, two or more treatments are carried out as necessary, selected among viscosity adjustment, pH adjustment, non-volatile content (NV) adjustment, addition of optional additives, etc. Examples of the additives include crosslinking agents, tackifier resins and preservatives.

In some embodiments, a crosslinking agent is used as the additive. Hereinafter, crosslinking agents that are added after emulsion polymerization are sometimes called "post crosslinking agents." The use of crosslinking agent can suitably increase the cohesive strength of the PSA formed from the PSA composition. The type of crosslinking agent is not particularly limited. A suitable species can be selected and used among, for instance, oxazoline-based crosslinking agents, carbodiimide-based crosslinking agents, isocyanate-based crosslinking agents, epoxy-based crosslinking agents, aziridine-based crosslinking agents, melamine-based crosslinking agents, peroxide-based crosslinking agents, urea-based crosslinking agents, metal alkoxide-based crosslinking agents, metal chelate-based crosslinking agents, metal salt-based crosslinking agents, hydrazine-based crosslinking agents and amine-based crosslinking agents. Either an oil-soluble or water-soluble crosslinking agent may be used. For the crosslinking agent, solely one species or a combination of two or more species can be used. In view of the storage stability of the water-dispersed PSA composition, etc., oxazoline-based and carbodiimide-based crosslinking agents are preferable.

Oxazoline-based crosslinking agents having at least one oxazoline group per molecule can be used without particular limitations. Oxazoline-based crosslinking agents that are soluble or dispersible in water are preferable. The oxazoline group can be 2-oxazoline, 3-oxazoline or 4-oxazoline group. In some embodiments, an oxazoline-based crosslinking agent having a 2-oxazoline group can be preferably used. Possible examples of the oxazoline-based crosslinking agent include a water-soluble or water-dispersed copolymer obtained by copolymerizing an addition-polymerizable oxazoline (e.g., 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-ethyl-2-oxazoline, etc.) and other monomer(s). Examples of commercially-available oxazoline-based crosslinking agents include product names EPOCROS WS-500, EPOCROS WS-700, EPOCROS K-2010E, EPOCROS K-2020E and EPOCROS K-2030E available from Nippon Shokubai Co., Ltd.

As the carbodiimide-based crosslinking agent, a lower or higher molecular weight compound having two or more carbodiimide groups can be used. In a water-dispersed PSA composition, it is preferable to use a water-soluble or water-dispersible carbodiimide-based crosslinking agent. Examples of commercially available carbodiimide-based crosslinking agents include the CARBODILITE series such as the CARBODILITE V series (aqueous solutions) including CARBODILITE V-02, CARBODILITE V-02-L2, and CARBODILITE V-04; and the CARBODILITE E series (aqueous dispersions) including CARBODILITE E-01, CARBODILITE E-02, and CARBODILITE E-04 available from Nisshinbo Holdings, Inc.

The water-dispersed PSA composition disclosed herein can be produced in an embodiment using essentially no crosslinking agent (post crosslinking agent) added after emulsion polymerization. For instance, in an embodiment that uses a starting monomer mixture comprising a silane monomer to obtain a polymer emulsion that includes a water-dispersed polymer (e.g., an acrylic polymer) in which the silane monomer has been copolymerized by emulsion polymerization, it is preferable to adopt a constitution not using a post crosslinking agent. Alternatively, a post crosslinking agent may be further added to a polymer emulsion that includes a water-dispersed polymer (e.g., an acrylic polymer) in which a silane monomer has been copolymerized.

When using a post crosslinking agent, the amount is not particularly limited and can be suitably set to obtain favorable properties after crosslinking. In some embodiments, the amount of post crosslinking agent used per 100 parts by weight of the base polymer (preferably an acrylic polymer) of the PSA composition is, for instance, possibly about 0.005 part by weight or greater, suitably about 0.01 part by weight or greater, preferably about 0.05 part by weight or greater, more preferably 0.1 part by weight or greater, possibly 0.3 part by weight or greater, or 0.5 part by weight or greater. In view of the PSA sheet adhesion, etc., the amount of the crosslinking agent per 100 parts by weight of base polymer is suitably about 15 parts by weight or less (e.g., about 10 parts by weight or less), preferably about 5 parts by weight or less, more preferably 4 parts by weight or less, possibly 3 parts by weight or less, or 2 parts by weight or less.

In some embodiments of the water-dispersed PSA composition disclosed herein, it comprises at least one species of crosslinking agent selected from the group consisting of a silane monomer, an oxazoline-based crosslinking agent and a carbodiimide-based crosslinking agent. When using oxazoline-based and/or carbodiimide-based crosslinking agents, they are preferably added as the aforementioned post crosslinking agents after emulsion polymerization. When using a silane monomer as a crosslinking agent, it is preferable to use the silane monomer as a component of the starting monomer mixture.

In some embodiments, a tackifier resin is used as the additive. The use of tackifier resin may help increase the adhesive strength of a PSA sheet having a PSA layer formed from the PSA composition. The type of crosslinking agent is not particularly limited. A suitable species can be selected and used among, for instance, Examples of the tackifier resin include rosin-based tackifier resins (including rosin derivative tackifier resins), petroleum-based tackifier resins, terpene-based tackifier resins and ketone-based tackifier resins. These can be used solely as one species or in a combination of two or more species.

Examples of the rosin-based tackifier resin include rosins such as gum rosin, wood rosin and tall oil rosin as well as stabilized rosins (e.g. stabilized rosins obtained by disproportionation or hydrogenation of the rosins), polymerized rosins (e.g. multimers, typically dimers, of the rosins) and modified rosins (e.g. unsaturated acid-modified rosins obtained by modification with an unsaturated acid such as maleic acid, fumaric acid or (meth)acrylic acid).

Examples of the rosin derivative tackifier resin include esterification products of the rosin-based resins (e.g. rosin esters such as stabilized rosin esters and polymerized rosin esters), phenol modification products of the rosin-based resins (phenol-modified rosins) and their esterification products (phenol-modified rosin esters).

Examples of the petroleum-based tackifier resin include aliphatic petroleum resins, aromatic petroleum resins, copolymeric petroleum resins, alicyclic petroleum resins and their hydrogenation products.

Examples of the terpene-based tackifier resin include α-pinene resins, β-pinene resins, aromatic group-modified terpene-based resins, and terpene-phenolic resins.

Examples of the ketone-based tackifier resin include ketone-based resins resulting from condensation of ketones (e.g. aliphatic ketones such as methyl ethyl ketone, methyl isobutyl ketone, acetophenone, etc.; alicyclic ketones such as cyclohexanone, methyl cyclohexanone, etc.) with formaldehyde.

Examples of preferable tackifier resins include rosin-based tackifier resins and terpene-based tackifier resins. Preferable examples of rosin-based tackifier resins include stabilized rosin esters and polymerized rosin esters. Preferable examples of terpene-based tackifier resins include terpene-phenol-based resins. Rosin-based and terpene-based tackifier resins may be used together.

In a preferable embodiment, the tackifier resin includes one, two or more species of terpene-based tackifier resin (typically terpene-phenol resin). For instance, the art disclosed herein can be preferably implemented in an embodiment where a terpene-phenol resin accounts for about 25 wt% or more (more preferably about 30 wt% or more) with the total amount of tackifier resin being 100 wt%. Of the total amount of tackifier resin, a terpene-phenol resin can account for about 50 wt% or more, or about 80 wt% or more (e.g., about 90 wt% or more). Essentially all (about 95 wt% to 100 wt%, or even about 99 wt% to 100 wt%) of the tackifier resin can be a terpene-phenol resin.

In other embodiments, the tackifier resin includes a rosin-based tackifier resin. For instance, with the total amount of tackifier resin being 100 wt%, a rosin-based tackifier resin may account for about 25 wt% or more (preferably about 30 wt% or more) thereof. Of the total amount of tackifier resin, a rosin-based tackifier resin can account for about 50 wt% or more, or about 80 wt% or more (e.g., about 90 wt% or more). Essentially all (about 95 wt% to 100 wt%, or even about 99 wt% to 100 wt%) of the tackifier resin can be a rosin-based tackifier resin.

As the tackifier resin, it is preferable to use a water-dispersed tackifier resin (typically, an emulsion in which a tackifier resin is dispersed in water; also called a tackifier resin emulsion). For instance, by mixing an aqueous emulsion of a water-dispersed polymer and an emulsion of the tackifier resin, a PSA composition can be easily prepared, comprising these components at a desirable ratio. A preferable tackifier resin emulsion is essentially free of at least aromatic hydrocarbon-based solvents (more preferably essentially free of aromatic hydrocarbon-based solvents and other organic solvents).

Such a tackifier resin emulsion can be prepared, using a surfactant (emulsifier) as necessary. As the surfactant possibly used in preparation of the tackifier resin emulsion, one, two or more species can be suitably selected and used among the same kinds of surfactant usable in preparation of the acrylic polymer emulsion. In typical, an anionic or nonionic surfactant is preferably used. The amount of surfactant used is not particularly limited as long as the tackifier resin can be prepared as an emulsion. For instance, it can be about 0.2 part by weight or greater (preferably 0.5 part by weight or greater) and about 10 parts by weight or less (preferably 5 parts by weight or less) to 100 parts by weight of tackifier resin (non-volatiles).

The tackifier resin content of the PSA layer is not particularly limited. In some embodiments, in view of favorably bringing about the effects of its use, the tackifier resin content (based on non-volatiles) per 100 parts by weight of base polymer (e.g., acrylic polymer) is typically suitably about 1 part by weight or greater, possibly about 5 parts by weight or greater, or about 10 parts by weight or greater. In some preferable embodiments, the tackifier resin content per 100 parts by weight of base polymer is about 15 parts by weight or greater, more preferably about 20 parts by weight or greater, yet more preferably about 25 parts by weight or greater, particularly preferably about 30 parts by weight or greater, or possibly about 35 parts by weight or greater. In some embodiments, the tackifier resin content per 100 parts by weight of base polymer is, for instance, possibly about 80 parts by weight or less, suitably 60 parts by weight or less, preferably about 50 parts by weight or less, more preferably 45 parts by weight or less, yet more preferably 40 parts by weight or less, possibly 30 parts by weight or less, 20 parts by weight or less, or 15 parts by weight or less. In other embodiments, the tackifier resin content per 100 parts by weight of water-dispersed polymer can be about 10 parts by weight or less (e.g., below 10 parts by weight), or less than 5 parts by weight.

The water-dispersed PSA composition disclosed herein may include a preservative as an optional component. For instance, a preservative can be added in the mixing step after emulsion polymerization. The preservative can be suitably selected among known preservatives such as isothiazolin-based, cyanoacetamide-based, phenol-based/phenyl ester-based, and thiocyanate-based preservatives. The amount of preservative used per 100 parts by weight of base polymer can be, for instance, 0.0001 part by weight or greater. In view of obtaining superior effects, it can be 0.001 part by weight or greater, or 0.01 part by weight or greater. In view of reducing environmental stress, etc., the amount of preservative used per 100 parts by weight of base polymer is typically suitably less than 1 part by weight, or preferably less than 0.5 part by weight. In some embodiments, the amount of preservative used per 100 parts by weight of base polymer can be less than 0.3 part by weight, less than 0.1 part by weight, or less than 0.05 part by weight. The PSA composition disclosed herein can benefit from decay prevention by having an oxygen concentration of 4 mg/L or higher, thereby achieving desirable preservative properties even if the amount of preservative is reduced or eliminated compared to PSA compositions with lower oxygen concentrations. For instance, the PSA composition disclosed herein can be implemented in an embodiment where the preservative content per 100 parts by weight of base polymer is 0.04 part by weight or less, 0.02 part by weight or less, 0.01 part by weight or less, or 0.005 part by weight or less. No preservatives need to be used.

The water-dispersed PSA composition (e.g., water-dispersed acrylic PSA composition) disclosed herein may optionally include various additives besides those described above as long as the effects of this invention is not significantly impaired. Such optional additives include acids and bases (ammonia water, etc.) used for pH adjustment, etc. Examples of other optional additives include thickener (which can be thought as viscosity modifier), leveling agent, crosslinking-aiding agent, release modifier, plasticizer, softener, filler, dispersant, rust inhibitor, antistatic agent, anti-aging agent, UV-ray absorber, antioxidant and light stabilizer. With respect to these various additives, heretofore known species can be used by typical methods. Since these do not particularly characterize the present invention, further details are omitted.

The PSA composition disclosed herein can have a viscosity of, for instance, 1 Pa·s or greater, or 2 Pa·s or greater. For improving the applicability (e.g., inhibiting cissing), etc., it is suitably 3 Pa·s or greater, preferably 4 Pa·s or greater, more preferably 5 Pa·s or greater, possibly 6 Pa·s or greater, 7 Pa·s or greater, or 8 Pa·s or greater. In some embodiments, the viscosity of a water-dispersed PSA composition is, for instance, 30 Pa·s or less. In view of improving the applicability (e.g., preventing streaks and peeling), etc., it is suitably 20 Pa·s or less, preferably 15 Pa·s or less, possibly 12 Pa·s or less, or 10 Pa·s or less. The viscosity of a PSA composition can be measured according to the method described later in Examples.

While no particular limitations are imposed, in view of applicability and ease of managing the layer thickness, the non-volatile (solid) content of the PSA composition is suitably 75 wt% or less, preferably 70 wt% or less, more preferably 65 wt% or less, possibly 60 wt% or less, or 55 wt% or less. In view of the productivity of the PSA sheet, the non-volatile content of the PSA composition is suitably 35 wt% or greater, advantageously 40 wt% or greater, preferably 45 wt% or greater, possibly 50 wt% or greater, or 55 wt% or greater.

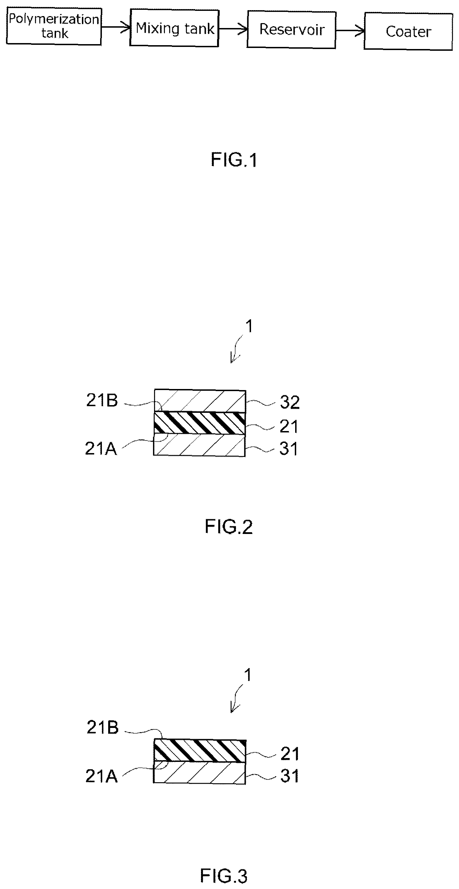

In some preferable embodiments, for instance, as schematically shown in Fig. 1, the mixing step is carried out in a mixing tank (typically equipped with a stirrer) separate from the reaction vessel (polymerization tank) used for emulsion polymerization of starting monomers. For instance, it is preferable that the polymer emulsion obtained by carrying out the polymerization step in the polymerization tank is removed from the polymerization tank and transferred to a mixing tank (in this process, the polymer emulsion may be filtered to remove aggregates that may have formed in the polymerization step), and then the mixing step is carried out in the mixing tank. This allows effective use of the polymerization tank after the polymer emulsion has been removed, for cleaning, inspection and polymerization of another batch. Mixing tanks generally do not require as complex a structure as polymerization tanks. Thus, for removing the polymer emulsion from the polymerization tank before subjecting it to additive addition, thickening or like treatment, there are advantages such as easy removal and easy polymerization tank cleaning.

The oxygen concentration of the PSA composition after the mixing step can be adjusted as necessary to obtain a PSA composition having an oxygen concentration of 4 mg/L or higher. The oxygen concentration can be adjusted (increased, maintained at a certain level or above, and so on), for instance, by a method comprising bringing the PSA composition in contact with an oxygen-containing gas to allow oxygen to be taken up. In some preferable embodiments, the oxygen concentration can be adjusted by a method comprising stirring the PSA composition in contact with an oxygen-containing gas. As the oxygen-containing gas, a gas comprising oxygen (O₂) is used. For instance, a preferable gas includes 10 % or more oxygen (more preferably 15 % or more, or yet more preferably 18 % or more) by volume under standard conditions (0 °C, 100 kPa). Air is a suitable example of the oxygen-containing gas. To efficiently incorporate oxygen into the PSA composition, an oxygen-containing gas with a higher oxygen concentration than air may be used. In an embodiment where the oxygen-containing gas includes other gases in addition to oxygen, in view of inhibiting quality alteration or discoloration of the PSA composition, it is preferable that an inert gas accounts for 50 % or more (more preferably 70 % or more, e.g., 90 % or more) thereof. Specific examples of the inert gas include nitrogen, argon, carbon dioxide, neon, helium, krypton and xenon. The oxygen-containing gas may include water vapor. In that case, with respect to the percentage (by volume) of oxygen and the other gases in the oxygen-containing, the total volume of the oxygen-containing gas excluding water vapor should be considered 100 %.

### (Reservoir)

In some preferable embodiments, for instance, as schematically shown in Fig. 1, the oxygen concentration is adjusted in a reservoir (typically equipped with a stirrer) separate from the mixing tank. For instance, it is preferable that the PSA composition obtained by carrying out the mixing step in the mixing tank is transferred from the mixing tank to a reservoir (in this process, the PSA composition may be filtered to remove aggregates that may have formed in the mixing step), and then the oxygen concentration is adjusted in the reservoir. Adjusting the oxygen concentration can be maintaining the oxygen concentration of the PSA composition at 4 mg/L or higher (e.g., at 4.5 mg/L or higher, at 5 mg/L or higher, or at 5.5 mg/L or higher). Adjusting the oxygen concentration can include, for instance, stirring the PSA composition in contact with an oxygen-containing gas. It is noted that after the mixing step has been completed in the mixing tank, the oxygen concentration can be adjusted successively therein.

The reservoir can be used to store the PSA composition obtained by the mixing step and to supply an appropriate amount of the PSA composition to the next step (e.g., a coating step using a coating machine, or a step of filling a container (e.g., a drum, shipping container, lorry, etc.) for shipment or storage). When only a portion of the PSA composition stored in the reservoir is supplied to the next step, the remaining PSA composition will be left in the reservoir. As the reservoir with the remaining PSA composition may be replenished with a new portion of the PSA composition, some of the PSA composition placed in the reservoir may stay there for an extended period of time. Also, the PSA composition can be supplied from the reservoir to the next step, for instance, through a pipe connected to the reservoir. When only a portion of the PSA composition in the reservoir is supplied (sent) to the next step via the pipe, the PSA composition present in the pipe at the end of supply may stagnate in the pipe (sometimes for a long time) until the next supply (next use of the pipe). The PSA composition disclosed herein has an oxygen concentration at a prescribed level or higher, and can thus effectively inhibit bacterial growth and exhibit good decay resistance even when used in such a way.

The oxygen concentration of the PSA composition in the reservoir is desirably maintained at a prescribed level or higher. The oxygen concentration can be favorably maintained, for instance, by a method that includes stirring the PSA composition in contact with an oxygen-containing gas to maintain the oxygen concentration at a prescribed level or higher. The method for stirring the PSA composition, stirring means, stirring conditions and so on can be appropriately set to maintain the oxygen concentration of the PSA composition at a prescribed level or higher without particular limitations. For instance, the PSA composition can be stirred continuously (constantly) or intermittently. Examples of the stirring means include a stirrer having stirring blades fixed to a rotating shaft. In some embodiments, a stirrer having two or more (e.g., 2 to 5) sets of stirring blades fixed to a single rotating shaft can be preferably used. A stirrer with such a configuration can suitably maintain the oxygen concentration at a prescribed level or higher. One reservoir may have one stirrer, or two or more stirrers.

### <PSA Sheet>

The PSA sheet disclosed herein has a PSA layer formed from a water-dispersed PSA composition disclosed herein. The PSA sheet may be a PSA sheet with substrate, which has the PSA layer on one or each face of a non-releasable substrate (support substrate), or a PSA sheet without substrate, in which the PSA layer is held on a release liner (i.e., a PSA sheet free of a non-releasable substrate). The concept of PSA sheet here may encompass so-called PSA tape, PSA label and PSA film. The PSA sheet disclosed herein may be in a roll form or a flat sheet form. Alternatively, the PSA sheet may be in a form that has been fashioned into any of various other shapes.

Fig. 2 and Fig. 3 show structural examples of an adhesively double-faced, substrate-free PSA sheet (double-faced PSA sheet without substrate). The PSA sheet 1 shown in Fig. 2 is a double-faced PSA sheet without substrate, formed of a PSA layer 21 free of a substrate, with both faces 21A and 21B of PSA layer 21 being adhesive surfaces. As shown in Fig. 2, in PSA sheet 1 before use, both sides 21A and 21B of PSA layer 21 may be protected with release liners 31 and 32, respectively, in which at least their PSA layer sides are release surfaces. Alternatively, in another possible structure as shown in Fig. 3, one face (adhesive surface) 21A of PSA layer 21 is protected with release liner 31 whose both sides are release faces, and when this is rolled up, the other face (adhesive surface) 21B of PSA layer 21 comes in contact with the backside of release liner 31 to be also protected with release liner 31.

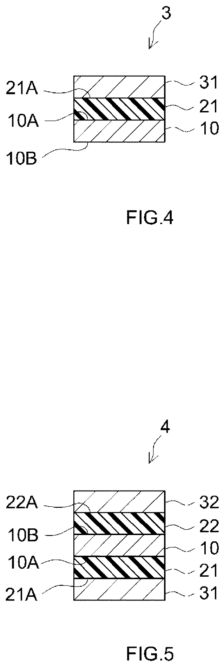

Fig. 4 schematically illustrates the PSA sheet according to another structural example. The PSA sheet 3 is configured as an adhesively single-faced PSA sheet with substrate, comprising a support substrate sheet 10 having first and second surfaces 10A and 10B, and a PSA layer 21 provided on the first surface 10A side. PSA layer 21 is fixed to the first surface 10A side of support substrate 10. That is, PSA layer 21 is not to be separated from support substrate 10. As shown in Fig. 4, in PSA sheet 3 before use, the surface (adhesive surface) 21A of PSA layer 21 is protected with a release liner 31 of which at least the side facing PSA layer 21 is a release surface.

Fig. 5 schematically illustrates the PSA sheet according to yet another structural example. The PSA sheet 4 is configured as a double-faced PSA sheet with substrate, comprising a support substrate sheet 10 having first and second surfaces 10A and 10B as well as first and second PSA layers 21 and 22 fixed to the first surface 10A side and second surface 10B side, respectively. As shown in Fig. 5, in PSA sheet 4 before use, the surfaces (first and second adhesive surfaces) 21A and 22A of the first and second PSA layers 21 and 22 are protected with release liners 31 and 32, respectively.

In some embodiments, when the PSA sheet is stored at 80 °C for 30 minutes, the total amount of volatile organic compounds (TVOC amount) emitted from the PSA sheet is, for instance, possibly 300 µg/g or less, preferably less than 250 µg/g, more preferably 200 µg/g or less (or below 200 µg/g), yet more preferably less than 150 µg/g, or particularly preferably less than 100 µg/g. The minimum TVOC amount of the PSA sheet is not particularly limited. In some embodiments, in practical aspects such as ease of production management, productivity, etc., the TVOC amount of the PSA sheet can be, for instance, 10 µg/g or greater, 30 µg/g or greater, or 50 µg/g or greater.

The TVOC amount of a PSA sheet can be measured as described below.

### [TVOC Measurement Method]

From the PSA sheet to be evaluated, a piece of the prescribed size (area: 5 cm²) is cut to prepare a sample. The sample is placed in a vial and sealed. Subsequently, the sample-containing vial is heated at 80 °C for 30 minutes and 1.0 mL of the heated gas is injected into a gas chromatograph (GC analyzer) using a headspace autosampler. Based on the resulting gas chromatogram, volatile substances expected from the materials used to prepare the PSA composition are assigned to peaks and quantified according to standard substances, and other (difficult-to-assign) peaks are quantified as toluene, thereby determining the amount of TVOC per gram of sample (PSA sheet) (µg/g).

The weight of the PSA sheet used as the basis for calculating the amount of TVOC per gram of PSA sheet is the total weight including the substrate and the PSA layer supported thereon (but excluding release liners if any). For a PSA sheet without substrate, it refers to the weight of the PSA layer itself.

In the TVOC measurement method, the GC analysis conditions are as shown below. The TVOC measurements of the PSA sheets described later in Examples were also carried out under the same GC conditions.
· Column: DB-FFAP 1.0 µm (0.535 mm φ × 30 m)
· Carrier gas: He at 5.0 mL/min
· Column head pressure: 23.5 kPa (40 °C)
· Inlet: split (split ratio = 12:1, temperature at 250 °C)
· Column temperature: 40 °C (0 min) - < +10 °C/min > - 250 °C (9 min) [meaning that the temperature is raised from 40 °C to 250 °C at a heating rate of 10 °C/min and maintained at 250 °C for 9 minutes]
· Detector: FID (temperature at 250 °C)

In some embodiments of the PSA sheet disclosed herein, the thickness of a PSA layer therein is not particularly limited. It can be, for instance, 5 µm or greater, or 10 µm or greater. In view of helping to obtain higher adhesive strength, it can be 20 µm or greater, 30 µm or greater, 40 µm or greater, 50 µm or greater, or 60 µm or greater. In view of ease of drying the PSA layer, in some embodiments, the PSA layer thickness is, for instance, 200 µm or less, preferably 150 µm or less, more preferably 100 µm or less, possibly 80 µm or less, 70 µm or less, less than 70 µm (e.g., 65 µm or less), 50 µm or less, 40 µm or less, 30 µm or less, or less than 30 µm.

In a double-faced PSA sheet without substrate consisting of a PSA layer, the PSA layer thickness is the double-faced PSA sheet thickness. In case of a double-faced PSA sheet with substrate having first and second PSA layers placed on first and second faces of a substrate, respectively, the PSA layer thickness is applied to at least one of the two PSA layers or preferably both. The first PSA layer thickness and the second PSA layer thickness may be about the same or different.

### (Support Substrate)

In an embodiment in which the PSA sheet disclosed herein is an adhesively single-faced or double-faced PSA sheet with substrate, the substrate (support substrate) supporting the PSA layer(s) can be paper, cloth, resin film, foam sheet, rubber sheet, metal foil, a composite of these, or the like. Examples of paper include Japanese paper, kraft paper, glassine paper, woodfree paper, synthetic paper, and top-coated paper. Examples of cloth include woven and nonwoven fabrics made from various fibrous materials, either alone or in combination. Examples of the fibrous materials include cotton, staple fiber, Manila hemp, pulp, rayon, acetate fiber, polyester fiber, polyvinyl alcohol fiber, polyamide fiber, and polyolefin fiber. Examples of resin films include polyolefinic resin films such as polyethylene film, polypropylene film, and ethylene-propylene copolymer film; polyester-based resin films such as polyethylene terephthalate film, polybutylene terephthalate film, and polyethylene naphthalate film; vinyl chloride-based resin films; vinyl acetate-based resin films; polyimide-based resin films; polyamide-based resin films; fluororesin films; and cellophane. Examples of foam sheets include polyurethane foam sheets and polychloroprene foam rubber sheets. Examples of rubber sheets include natural rubber sheets and butyl rubber sheets. Examples of metal foil include aluminum foil and copper foil.

The term "nonwoven fabrics" here refers primarily to nonwoven fabrics for PSA sheets used in the field of PSA tape and other PSA sheets, typically referring to nonwoven fabrics (sometimes referred to as "paper") that are made using a general papermaking machine. The resin film here is typically a non-porous resin sheet and the concept thereof is distinguished from, for instance, nonwoven and woven fabrics (i.e., nonwoven and woven fabrics are excluded). Such resin films may also be non-foamed. Non-foamed resin films here refer to resin films that have not been intentionally processed to create a foam. Specifically, non-foamed resin films can have an expansion ratio of less than 1.1 (e.g., less than 1.05, typically less than 1.01). The resin film may be unstretched, uniaxially stretched, or biaxially stretched.

In some embodiments, in view of the processability and handling properties of PSA sheets with substrate, the flexibility and hand-tearing properties of double-faced PSA sheets, etc., nonwoven fabrics can be preferably used as the substrate. Examples of nonwoven fabrics that can be used include nonwoven fabrics formed from natural fibers such as pulps (e.g., wood pulp, hemp pulp), cotton, hemp (e.g., Manila hemp), wool, and silk; nonwoven fabrics formed of chemical fibers (synthetic fibers) such as polyester fiber (e.g., polyethylene terephthalate (PET) fiber), rayon, vinylon, acetate fiber, polyvinyl alcohol (PVA) fiber, polyamide fiber, polyolefin fiber, and polyurethane fiber; nonwoven fabrics formed of two or more different fiber materials. Among these, in view of PSA impregnation and strength, preferable nonwoven fabrics include nonwoven fabrics formed of paper pulp such as wood pulp and hemp pulp (e.g., hemp pulp formed from Manila hemp), nonwoven fabrics formed of wool, and nonwoven fabrics formed of PET fiber.

In addition to the fibrous materials described above, fiber sheets (e.g., nonwoven fabrics) may include, typically in a non-fibrous form, resin components such as starch (e.g., cationic starch), polyacrylamide, viscose, polyvinyl alcohol, urea formaldehyde resin, melamine formaldehyde resin, and polyamide polyamine epichlorohydrin. The resin components may serve as paper strengtheners for nonwoven fabrics. Such resin components can be used as needed to adjust the fiber sheet strength and PSA impregnation into the fiber sheet. The fiber sheet in the art disclosed herein may also include other additives as needed, such as retention aids, drainage aids, viscosity modifiers, and dispersants that are common in fields related to manufacturing of fiber sheets (e.g., nonwoven fabrics).

In an embodiment using a nonwoven fabric as the substrate, the nonwoven fabric can have a thickness in the range of, for instance, about 5 µm or greater and 100 µm or less. In some embodiments, the nonwoven fabric thickness can be, for instance, 10 µm or greater. In view of strength and handling properties, it is preferably 15 µm or greater, more preferably 20 µm or greater, or more preferably 30 µm or greater. The nonwoven fabric thickness can be, for instance, 80 µm or less, 60 µm or less, 50 µm or less, 40 µm or less, 35 µm or less, or 25 µm or less. The thinner the nonwoven fabric is, the easier it is to impregnate the PSA deep into the fabric.

The nonwoven fabric used as the substrate may have a grammage (weight per unit area) in the range of, for instance, about 1 g/m² or greater and 100 g/m² or less. In some embodiments, the grammage of the nonwoven fabric can be, for instance, 3 g/m² or greater. In view of strength and handling properties, it is advantageously 5 g/m² or greater, preferably 8 g/m² or greater, or more preferably 10 g/m² or greater (e.g., 12 g/m² or greater). The grammage of the nonwoven fabric can be, for instance, 70 g/m² or less. In view of thinning of a double-faced PSA sheet and ease of PSA impregnation, it is advantageously 50 g/m² or less, preferably 40 g/m² or less, more preferably 30 g/m² or less, possibly 25 g/m² or less, 20 g/m² or less, or 18 g/m² or less.

In an embodiment where the PSA sheet disclosed herein is a double-faced PSA sheet with substrate, the thickness of the double-faced PSA sheet with substrate (the thickness between the first and second adhesive faces, not including release liners if any) can be, for instance, 45 µm or greater, 55 µm or greater, or 65 µm or greater. In some embodiments, the double-faced PSA sheet with substrate has a thickness of suitably greater than 70 µm, preferably 80 µm or greater, possibly 90 µm or greater, 100 µm or greater, or greater than 100 µm (e.g., 105 µm or greater, or 110 µm or greater). The thickness of the double-faced PSA sheet with substrate can be, for instance, 500 µm or less, or 400 µm or less. In view of reducing thickness and weight, it can be 300 µm or less, 250 µm or less, 200 µm or less, or 150 µm or less.

### (PSA Sheet Production)

The PSA layer in the PSA sheet disclosed herein can be favorably formed by applying a water-dispersed PSA composition disclosed herein onto a prescribed surface and drying it. For instance, in case of a PSA sheet with substrate, the PSA composition can be directly applied to a substrate to form a PSA layer, or a PSA layer formed on a release liner can be laminated (transferred) onto a substrate. The PSA composition can be applied, using a conventional coater (e.g., gravure roll coater, reverse roll coater, kiss roll coater, dip roll coater, bar coater, knife coater, spray coater, etc.).

### (Release Liner)

In the art disclosed herein, a release liner can be used when forming PSA layers; producing PSA sheets; storing, distributing, shaping and so on of PSA sheets before use. The release liner is not particularly limited. Possible examples include release liners having a release treatment layer on the surface of a substrate (release liner substrate) such as a resin film and paper (which may be coated with a resin such as polyethylene), and release liners formed from low-adhesive materials such as fluoropolymers (polytetrafluoroethylene, etc.) and polyolefinic resins (polyethylene, polypropylene, etc.). The release treatment layer can be formed, for instance, by surface-treating the release liner substrate with a silicone-based, long-chain alkyl-based, fluorine-based, molybdenum sulfide, or like release agent.

As understood from the above description and the working examples shown below, the matters disclosed by this specification include the following:
(1) A water-dispersed PSA composition comprising:
   an emulsion polymerization product of starting monomers,
   wherein the water-dispersed PSA composition has a residual monomer amount of 500 µg/g or less, and has an oxygen concentration of 4 mg/L or higher.
(2) The water-dispersed PSA composition according to (1) above, wherein the starting monomers includes 50 % or more of acrylic monomer by weight.
(3) The water-dispersed PSA composition according to (1) or (2) above, wherein
   the water-dispersed PSA composition comprises a crosslinking agent, and
   the starting monomers includes a silane monomer as the crosslinking agent.
(4) The water-dispersed PSA composition according to any of (1) to (3) above, wherein
   the water-dispersed PSA composition comprises a crosslinking agent, and
   the crosslinking agent includes at least one species selected among oxazoline-based crosslinking agents and carbodiimide-based crosslinking agents.
(5) A PSA sheet having a PSA layer formed from the water-dispersed PSA composition according to any of (1) to (4) above.
(6) The PSA sheet according to (5) above, such that when the PSA sheet is stored at 80 °C for 30 minutes, the total amount of volatile organic compounds emitted therefrom is 200 µg or less per gram of the PSA sheet.
(7) A method for storing a water-dispersed PSA composition, wherein
   the water-dispersed PSA composition comprises an emulsion polymerization product of starting monomers and has a residual monomer amount of 500 µg/g or less, and
   the storage method includes maintaining the oxygen concentration of the water-dispersed PSA composition at 4 mg/L or higher.
(8) The method according to (7) above, wherein maintaining the oxygen concentration at 4 mg/L or higher includes stirring the water-dispersed PSA composition in contact with an oxygen-containing gas.
(9) A method for preventing a water-dispersed PSA composition from decaying, wherein
   the water-dispersed PSA composition comprises an emulsion polymerization product of starting monomers and has a residual monomer amount of 500 µg/g or less, and
   the method includes maintaining the oxygen concentration of the water-dispersed PSA composition at 4 mg/L or higher.
(10) The method according to (9) above, wherein maintaining the oxygen concentration at 4 mg/L or higher includes stirring the water-dispersed PSA composition in contact with an oxygen-containing gas.

### [Examples]

Several working examples relating to the present invention are described below, but the present invention is not intended to be limited to these examples. In the description below, "parts" and "%" are based on weight unless otherwise specified.

### <Example 1>

Into a reaction vessel equipped with a stirrer, thermometer, condenser, addition funnel and nitrogen inlet, was placed 40 parts of ion-exchanged water. Under a nitrogen flow, the resultant was stirred at 60 °C for 1 hour. Subsequently, to the reaction vessel, was added 0.1 part of 2,2'-azobis[2-(5-methyl-2-imidazolin-2-yl)propane] dihydrochloride (polymerization initiator). To the resulting mixture, was added dropwise a monomer emulsion at 60 °C over 4 hours. The monomer emulsion was formed by emulsifying the following with 30 parts of ion-exchanged water: as starting monomers, 85 parts of 2-ethylhexyl acrylate, 13 parts of methyl acrylate, 1.25 parts of acrylic acid, 0.75 part of methacrylic acid and 0.02 part of a silane monomer (product name KBM-503, 3-methacryloxypropyltrimethoxysilane, available from Shin-Etsu Chemical Co., Ltd.; shown as crosslinking agent A1 in Table 1); 0.048 part of t-lauryl mercaptan (chain transfer agent); and 2 parts of sodium polyoxyethylene lauryl sulfate (emulsifier). After completion of the dropwise addition of the monomer emulsion, the mixture was stirred at 60 °C for 3 more hours. Subsequently, were added 0.2 part of 35 % aqueous hydrogen peroxide and 0.6 part of ascorbic acid per 100 parts of the starting monomers used in the polymerization. After the system was cooled to room temperature, 10 % aqueous ammonia was added to adjust the pH to 7.0. In this manner was obtained a polymer emulsion P1 comprising an acrylic polymer (water-dispersed acrylic polymer) as an emulsion polymerization product of the starting monomers.

To a mixing vessel equipped with a stirrer, the resulting polymer emulsion P1 was transferred. To 100 parts of acrylic polymer in the emulsion P1, based on non-volatiles, were added 10 parts of a tackifier resin (product name SUPER ESTER E-865-NT available from Arakawa Chemical Industries, Ltd.; aqueous emulsion of polymerized rosin ester having a softening point of 160 °C) and 0.04 part of a preservative (product name REVANAX BX-150, an isothiazoline-based preservative, available from Shoei Chemical Co., Ltd.). To this, were further added 10 % aqueous ammonia as a pH adjuster and polyacrylic acid (product name ARON B-500 available from Toagosei Co., Ltd.) as a thickener to pH 8.0 and a viscosity of 10 Pa·s to obtain a PSA composition C1u with an unadjusted oxygen concentration. The viscosity was determined using a BH viscometer with a rotor No. 3 at a rotation speed of 20 rpm, a liquid temperature of 30 °C, and a measurement time of 1 minute.

The resulting PSA composition C1u was transferred to a reservoir approximately 2.0 m deep, the reservoir equipped with a stirrer having two or more sets of stirring blades on a single rotating shaft. The PSA composition in the reservoir had a liquid surface area of approximately 5 m² (when left to stand) and was approximately 1.5 m deep from the liquid surface to the bottom of the reservoir. The two or more sets of stirring blades were located approximately 50 cm to 100 cm deep from the liquid surface. The reservoir had a top opening communicating with the outside. The space above the liquid surface of the PSA composition was always filled with air.

The PSA composition was continuously stirred with the stirrer to incorporate oxygen from the air in contact with the liquid surface. At prescribed time intervals after stirring began, approximately 200 mL samples of the PSA composition were collected slightly outside the stirring blade tips in a top view of the reservoir, and about 30 cm below the liquid surface. With respect to these samples, the oxygen concentration was measured. The oxygen concentration gradually increased and became roughly constant at about 6 mg/L within 24 hours after stirring began. In this way, was obtained a PSA composition C1a having an oxygen concentration of 6 mg/L.

In Examples and Comparative Examples, the oxygen concentration was measured at room temperature (around 20 °C to 25 °C), using a DO meter (model 810Aplus) available from THERMO ELECTRON Co., Ltd.

### <Example 2>

In this example, was used a starting monomer mixture having a composition that excluded the silane monomer from the starting monomer mixture used for producing the polymer emulsion P1 in Example 1. Using this monomer mixture, but otherwise in the same manner as for the polymer emulsion P1, was obtained a polymer emulsion P2 comprising an acrylic polymer as an emulsion polymerization product of the starting monomers. To 100 parts of acrylic polymer in the emulsion P2, was added 0.4 part of a carbodiimide-based crosslinking agent (product name CARBODILITE V-04 available from Nisshinbo Holdings, Inc.; shown as crosslinking agent A2 in Table 1). Otherwise in the same manner as for the PSA composition C1u in Example 1, was obtained a PSA composition C2u with an unadjusted oxygen concentration.

The resulting PSA composition C2u was transferred to the same reservoir as Example 1 and the oxygen concentration was monitored while stirring in the same manner. The oxygen concentration gradually increased and became roughly constant at about 6 mg/L within 24 hours after stirring began. In this way was obtained a PSA composition C2a having an oxygen concentration of 6 mg/L.

### <Example 3>

The carbodiimide-based crosslinking agent used in Example 2 was changed to 1.0 part of an oxazoline-based crosslinking agent (product name EPOCROS WS-700 available from Nippon Shokubai Co., Ltd.; shown as crosslinking agent A3 in Table 1) per 100 parts of acrylic polymer in the emulsion P2. Otherwise in the same manner as for the PSA composition C2u in Example 1, was obtained a PSA composition C3u with an unadjusted oxygen concentration.

The resulting PSA composition C3u was transferred to the same reservoir as Example 1 and the oxygen concentration was monitored while stirring in the same manner. The oxygen concentration gradually increased and became roughly constant at about 6 mg/L within 24 hours after stirring began. In this way, was obtained a PSA composition C3a having an oxygen concentration of 6 mg/L.

### <Example 4>

When the PSA composition C1u with an unadjusted oxygen concentration was placed in the reservoir and then continuously stirred with the stirrer, the rotation speed of the stirrer was set to about 50 % of that in Example 1 and the oxygen concentration was monitored while stirring in the same manner as Example 1. The oxygen concentration gradually increased and became roughly constant at about 4.5 mg/L within 24 hours after stirring began. In this way, was obtained a PSA composition C4a having an oxygen concentration of 4.5 mg/L.

### <Comparative Example 1>

The PSA composition C1u with an unadjusted oxygen concentration in Example 1 was transferred to the reservoir and left standing without stirring for 24 hours to obtain a PSA composition C5a. The PSA composition C5a had an oxygen concentration of 3 mg/L (measured in a sample collected about 30 cm deep below the liquid surface).

### <Comparative Example 2>

The addition of 35 % aqueous hydrogen peroxide and ascorbic acid were omitted. Otherwise in the same manner as for the polymer emulsion P1 in Example 1 was obtained a polymer emulsion P3. Using the polymer emulsion P3, but otherwise in the same manner as Example 1, was obtained a PSA composition C6u with an unadjusted oxygen concentration. The PSA composition C6u was transferred to the reservoir and left standing for 24 hours to obtain a PSA composition C6a. The oxygen concentration was 3 mg/L, measured in the same manner as Comparative Example 1.

### <Comparative Example 3>

The stirring time at 60 °C after completion of the dropwise addition of the monomer emulsion was changed from 3 hours to 5 hours and the addition of 35 % aqueous hydrogen peroxide and ascorbic acid were omitted. Otherwise in the same manner as for the polymer emulsion P1 in Example 1, was obtained a polymer emulsion P4. Using the polymer emulsion P4, but otherwise in the same manner as Example 1, was obtained a PSA composition C7u with an unadjusted oxygen concentration. The PSA composition C7u was transferred to the reservoir and left standing for 24 hours to obtain a PSA composition C7a. The oxygen concentration was 3 mg/L, measured in the same manner as Comparative Example 1.

The following measurements and evaluations were carried out using the PSA compositions 24 hours after the start of stirring (Examples 1 to 4), or using the PSA compositions transferred to the reservoir and left standing for 24 hours (Comparative Examples 1 to 3). The results are shown in Table 1.

### <Quantification of residual monomer>

Approximately 0.2 g of a sample collected from the PSA composition according to each example was dissolved in about 10 mL of tetrahydrofuran and analyzed by gas chromatography (GC) under the conditions shown below to determine the amount of residual monomer per unit weight of PSA composition (µg/g). The GC analysis was carried out using an analyzer, model 6890N, available from Agilent Technologies.

### [Measurement conditions]

Column: DB-FFAP 1.0 µm (0.535 mm φ × 30 m)
Carrier gas: He at 5.0 mL/min (constant flow mode)
Column head pressure: 23.5 kPa (40 °C)
Inlet: split (split ratio = 12:1, temperature at 250 °C)
Column temperature: 40 °C (0 min) - < +10 °C/min > - 250 °C (9 min) [temperature raised from 40 °C to 250 °C at a heating rate of 10 °C/min and maintained at 250 °C for 9 minutes]
Detector: FID (temperature at 250 °C)

### <Decay resistance test>

### (Odor test)

To a 50 mL screw vial, was added 20 g of the PSA composition according to each example and sealed with a lid. The sealed screw vial was stored at 30 °C for one week.

Thirty healthy men and women in their 20s to 40s were randomly selected as monitors. Each monitor opened the lid of the screw vial under an atmosphere at 23 °C, smelled it, and judged whether there was a putrid odor. The results were rated on a four-point scale according to the number of monitors who detected a putrid odor. The higher the score, the better the decay resistance (3 points maximum).
3 points: 0 people
2 points: 1 to 5 people
1 point: 6 to 15 people
0 point: 16 or more people

### (Bacteria enumeration)

To a 50 mL screw vial, was added 20 g of the PSA composition according to each example and sealed with a lid. The resultant was stored at 30 °C for 7 days. Subsequently, the PSA composition sample was collected from the screw vial and diluted 100 times with distilled water that had been confirmed to be free of bacteria. 1.0 mL of the diluted composition was applied to a medium sheet (microbial detection sheet MC-MEDIA PAD (trademark) Ac plus for general viable bacteria available from JNC Corporation) and cultured at 35 °C for 48 hours. After cultivation, the number of colored spots that developed on the medium surface was multiplied by 100 to determine the number of bacteria per mL of PSA composition after storage at 30 °C for 7 days.

### <PSA sheet preparation>

Using an applicator, the PSA composition according to each example was applied to a release-treated face to the release-treated surface of a release liner (product name 75EPS (M) CREAM (renewed) available from Oji Specialty Paper Co., Ltd.) having a release layer treated with a silicone release agent, and dried at 100 °C for 2 minutes to form a PSA layer approximately 60 µm thick. Two sheets of the release liner with PSA layer were obtained and the PSA layers were adhered to both sides of a nonwoven fabric substrate (product name SP BASE PAPER-14 available from Daifuku Paper Co., Ltd.; 14 g/m² grammage, 42 µm thick) to prepare a double-faced PSA sheet with substrate. Both adhesive surfaces of the PSA sheet were protected with the release liners used in preparing the PSA sheet.

The PSA composition according to each example was placed into a wide-mouth polyethylene jar. The jar was capped and stored at 23 °C for one week. In all examples, the PSA composition showed no significant thickening (a large increase in viscosity than before storage) or gelation, and the PSA composition after storage was applied to the release surface of the release liner without any problems.

### <TVOC measurement>

From the double-faced PSA sheet with substrate prepared above, a piece of the prescribed size (area: 5 cm²) was cut to prepare a sample. The sample (excluding the release liners) was placed in a vial and sealed. The vial was heated at 80 °C for 30 minutes and 1.0 mL of the heated gas (sample gas) was injected into a GC analyzer using a headspace autosampler. Based on the resulting gas chromatogram, the amount of TVOC per gram of sample (PSA sheet) (µg/g) was determined.

### [Table 1]

**Table 1**

| | | | Ex. 1 | Ex. 2 | Ex. 3 | Ex. 4 | Comp. Ex. 1 | Comp. Ex. 2 | Comp. Ex. 3 |
|---|---|---|---|---|---|---|---|---|---|
| PSA composition | Polymer emulsion | | P1 | P2 | P2 | P1 | P1 | P3 | P4 |
| | Crosslinking agent | | A1 | A2 | A3 | A1 | A1 | A1 | A1 |
| | Amount of residual monomer (µg/g) | | 200 | 200 | 200 | 200 | 200 | 2,000 | 1,000 |
| | Oxygen concentration (mg/L) | | 6 | 6 | 6 | 4.5 | 3 | 3 | 3 |
| Evaluations | Decay resistance | Odor test (3 pts max.) | 3 | 3 | 3 | 3 | 0 | 3 | 1 |
| | | Bacterial counts (cells/mL) | <1×10² | <1×10² | <1×10² | 1×10² | 1×10⁶ | <1×10² | 1×10⁵ |
| | TVOC (µg/g) | | 60 | 60 | 60 | 60 | 60 | 400 | 250 |

| | | | | | | | | | |
|---|---|---|---|---|---|---|---|---|---|
| Crosslinking agent A1: silane monomer A2: carbodiimide-based crosslinking agent A3: oxazoline-based crosslinking agent | | | | | | | | | |

As shown in Table 1, in a comparison of Comparative Examples 1 to 3 (PSA compositions C5a to C7a), Comparative Example 2 with a high amount of residual monomer showed good decay resistance both in the odor test and bacteria enumeration; Comparative Example 3 with a somewhat lower amount of residual monomer had an increase in bacterial counts, with one-fifth to one-half of the monitors detecting a putrid odor; and Comparative Example 1 with a significantly reduced amount of residual monomer had a further increase in bacterial counts, with the majority of the monitors (in fact all of them) detecting a distinct putrid odor. In addition, as the amount of residual monomer in a PSA composition decreased, the TVOC of PSA sheets produced using the PSA composition showed a tendency to decrease.

On the other hand, the PSA compositions C1a to C4a of Examples 1 to 4 adjusted to an oxygen concentration in reservoir of 4 mg/L or higher, all achieved full marks for decay resistance in the odor test. According to the results of the bacteria enumeration, the PSA compositions of Examples 1 to 3 exhibited superior decay resistance as compared with the PSA composition of Example 4. Furthermore, the results of Examples 1 to 3 show that, regardless of whether a silane monomer, carbodiimide-based crosslinking agent, or oxazoline-based crosslinking agent was used as the crosslinking agent, good decay resistance was obtained by maintaining the oxygen concentration at the prescribed level or above.

Although specific embodiments of the present invention have been described in detail above, these are merely for illustrations and do not limit the scope of claims. The art according to the claims includes various modifications and changes made to the specific embodiments illustrated above.

### [Reference Signs List]

1, 3, 4 PSA sheets
10 support substrate
10A first face
10B second face (backside)
21 PSA layer (first PSA layer)
21A adhesive surface (first adhesive surface)
21B adhesive surface (second adhesive surface)
22 PSA layer (second PSA layer)
22A adhesive surface (second adhesive surface)
31, 32 release liners

## Claims

1. A water-dispersed pressure-sensitive adhesive composition comprising:
an emulsion polymerization product of starting monomers,
wherein the water-dispersed pressure-sensitive adhesive composition has a residual monomer amount of 500 µg/g or less, and has an oxygen concentration of 4 mg/L or higher.

2. The water-dispersed pressure-sensitive adhesive composition according to Claim 1, wherein the starting monomers comprise 50 % or more of acrylic monomer by weight.

3. The water-dispersed pressure-sensitive adhesive composition according to Claim 1 or 2, wherein
the water-dispersed pressure-sensitive adhesive composition comprises a crosslinking agent, and
the starting monomers comprises a silane monomer as the crosslinking agent.

4. The water-dispersed pressure-sensitive adhesive composition according to any one of Claims 1 to 3, wherein
the water-dispersed pressure-sensitive adhesive composition comprises a crosslinking agent, and
the crosslinking agent comprises at least one species selected among oxazoline-based crosslinking agents and carbodiimide-based crosslinking agents.

5. A pressure-sensitive adhesive sheet comprising a pressure-sensitive adhesive layer formed from the water-dispersed pressure-sensitive adhesive composition according to any one of Claims 1 to 4.

6. The pressure-sensitive adhesive sheet according to Claim 5, such that when the pressure-sensitive adhesive sheet is stored at 80 °C for 30 minutes, the total amount of volatile organic compounds emitted therefrom is 200 µg or less per gram of the pressure-sensitive adhesive sheet.

7. A method for storing a water-dispersed pressure-sensitive adhesive composition, wherein
the water-dispersed pressure-sensitive adhesive composition comprises an emulsion polymerization product of starting monomers and has a residual monomer amount of 500 µg/g or less, and
the method comprises maintaining an oxygen concentration of the water-dispersed pressure-sensitive adhesive composition at 4 mg/L or higher.

8. The method according to Claim 7, wherein maintaining the oxygen concentration at 4 mg/L or higher comprises stirring the water-dispersed pressure-sensitive adhesive composition in contact with an oxygen-containing gas.
